Europäisches Patentamt

**European Patent Office**

Office européen des brevets

(19)

(11) Publication number: **0 081 860**
**A2**

(12) # EUROPEAN PATENT APPLICATION

(21) Application number: **82111836.1**

(22) Date of filing: **17.05.82**

(51) Int. Cl.³: **G 01 D 5/30**

(30) Priority: **18.05.81 US 265031**
**26.04.82 US 371321**

(43) Date of publication of application: **22.06.83**
**Bulletin 83/25**

(84) Designated Contracting States: **AT BE CH DE FR GB IT LI LU NL SE**

(60) Publication number of the earlier application in accordance with Art. 76 EPC: **0067531**

(71) Applicant: **Scott, David R., 44064 North 28th Street, Lancaster California 93534 (US)**
Applicant: **Rhoades, Thomas S., 420, Buckeye Drive, Colorado Springs Colorado 80919 (US)**

(72) Inventor: **Scott, David R., 44064 North 28th Street, Lancaster California 93534 (US)**
Inventor: **Rhoades, Thomas S., 420, Buckeye Drive, Colorado Springs Colorado 80919 (US)**

(74) Representative: **Stephens, Michael John et al, M.J. Stephens & Co. Royal Building 11 St. Andrew's Cross, Plymouth Devon PL1 2DS (GB)**

(54) **Perimeter security system.**

(57) A system is provided for locating and for characterising the source of attempted and/or actual penetration of the security perimeters of relatively large geographical areas. The system comprises an array of structural moment detectors (361), and electronic circuitry (363) for processing and manipulating signals derived from the detectors (363) in such a manner as to produce secondary signals indicative of any seismic forces caused by a penetration of the security perimeter, the effect of extraneous seismic forces being excluded. In one embodiment, the electronic circuitry (363) associated with each structural moment detector (361) is provided in the same housing as the detector to form a unitary device termed a structural information detector.

0081860

## PERIMETER SECURITY SYSTEM

This invention relates to perimeter security systems for locating and characterising the source of attempted and/or actual penetration of the security perimeters of relatively large geographical areas; more particularly, the invention relates to such systems employing structural moment detectors.

Structural moment detectors or flexural rigidity sensors are known which are constituted by optical sensors in the form of autocollimators insensitive to linear dynamic motion but responsive to angular deflection of one end of the sensor with respect to the other. For example, such sensors are disclosed in the patent to Rossire, U.S. No. 3,229,511 and in the publication entitled "The Structural Rigidity Sensor: Applications in Non-Destructive Testing", published by the Air Force Systems Command, United States Air Force (Frank J. Seiler Research Laboratory, Publication SRL-TR-75-0017, October,1975). See also the U.S. patents to Okubo Nos. 4,159,422 issued June 26, 1979 and 4,164,149 issued August 14, 1979.

Systems which employ structural moment detectors to measure and record certain effects of forces acting on a structure are also disclosed in the publications described above. For example, the Rossire patent discloses an aircraft attitude control system in which a structural moment detector is used to sense wing loading and automatically adjust the attitude of the aircraft to maintain wing loading within safe operational limits.

It is an object of the present invention to provide an improved perimeter security system utilising structural moment detectors.

Accordingly, the present invention provides a perimeter security system for locating and characterising the source of attempted and/or actual penetration of relatively large geographical areas, characterised in that said system comprises, in combination:

    a) a plurality of structural moment detectors arranged at spacedpoints in ground contact to detect intrusions and activities within and near the perimeter of said area;

    b) processing means for processing said output signals to modify the information content thereof, including rejecting components of said signals indicative of the effects of extraneous seismic forces caused by other than said intrusions and/or activities; and

    c) signal-manipulating means for manipulating the processed signals output by the processing means to provide secondary signals responsive to seismic forces caused by said intrusions and/or activities.

The systems of the invention can employ substantailly conventional structural moment detectors, the output of which is simply raw data which does not directly indicate or give useful information concerning the effect of forces acting on a structure to which the sensor is attached. In such cases, the raw data from the sensors is conditioned and processed by external electronics, including microprocessors and computational software, usually necessarily located at locations remote from the sensors themselves.

Alternatively the systems of the invention can employ structural information detectors in which the raw signal from the optical sensor of an optical structural moment detector is converted and processed within a unitary device (either a single-piece device or a multi-component device in which each of the components is assembled to form an integral unit) such that the electrical signal output of the device has a directly useful information content which can be displayed or recorded by any conventional means or which can be directly utilized to activate control systems.

The term "surface coordinate vector" as used herein is intended to mean  both the normal and the tangent to the surface of a structure and any angle therebetween.

The invention will now be particularly described, by way of example, with reference to the accompanying diagrammatic drawings, in which:

Fig. 1 is a sectional view of a typical prior art structural moiment detector;

Fig. 2 is a typical schematic of the LED driver circuit of the structural moment detector of Fig. 1;

Fig. 3 is a typical schematic of the readout electronics circuits of the structural moment detector of Fig. 1:

Fig. 4 is a schematic drawing of a monitoring system embodying the invention;

Figs. 5A and 5B are schematic perspective views of  respective embodiments of the invention in which the monitoring system of Fig. 4 has been applied to battlefield force detection.

Fig. 6 is a generalised block diagram illustrating the major sub-components of a structural information detector suitable for use in the systems of Figures 4 and 5;

Fig. 7 is a circuit schematic depicting an analog circuit which functions to electrically interface the optical detector of the structural information detector of Figure 6 with signal-processing electronics;

Fig. 8 is a circuit schematic depicting the current source circuit for light-emitting diodes of the optical sensor portion of the Figure 6 structural information detector;

Fig. 9 is a sectional view of one particular form of the Figure 6 structural information detector;

Fig. 10 is a perspective view of another particular form of the Figure 6 structural information detector in which the components are carried by a semiconductor substrate; and

Fig 11 is a perspective view of an optical system usable in the Figure 6 structural information detector as well as in the structural moment detectors or flexural rigidity sensors of the prior art.

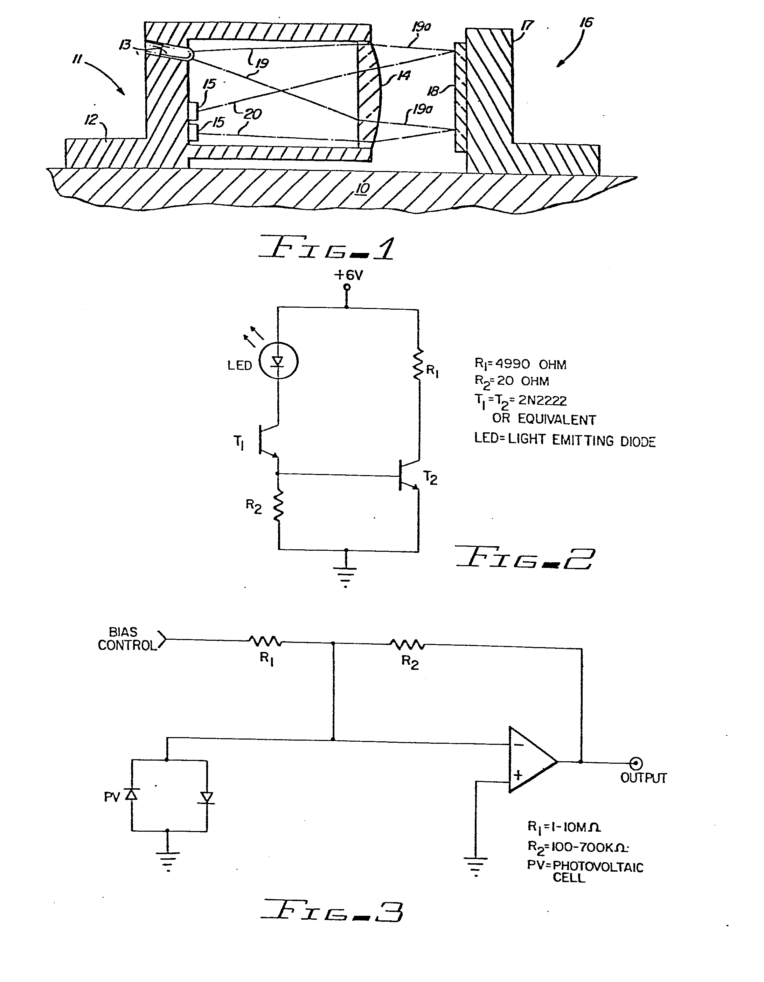

As used herein, the term "structural moment detector" means a device which measures the integral of the structure moment between two points on the structure. Such devices are known in the art, but, for clarity, a typical structural moment detector will be briefly described with reference to Figs. 1-3 and the accompanying descriptive material.

The structural moment detector shown in Figure 1 is basically an autocollimator that is insensitive to linear dynamic motions but responds to angular deflection of one end of the sensor with respect to the other. The structural moment detector illustrated consists of two separate parts which are mounted at spaced locations on a beam 10. One of the parts 11 is a support bracket 12 which carries a light-emitting diode (LED) 13, a collimating lens 14 and dual photovoltaic detectors 15. The other part 16 of the structural moment detector consists of a support bracket 17 which carries a plane front mirror 18. The two parts 11 and 16 are suitably joined by a bellows or other hood member (omitted for clarity of illustration) to exclude extraneous light. The LED 13 emits an infrared light beam 19 which is collimated by the collimating lens 14. The collimated light beam 19a impinges on the mirror 18 and, as indicated by the dashed lines 10, is reflected back through the collimating lens 14 to the photovoltaic cells 15. Angular motions, but not linear motions, of the mirror 18 result in varying amounts of infrared radiation reaching each of the photovoltaic cells 15. The difference in voltage output of the photovoltaic cells 15 is then proportional to the angular motion of the mirror 18 with respect to the cells 15.

Structural moment detectors of the Figure 1 form are capable of measuring the deflection of the beam with a resolution of 1 milliarc second ($4.85 \times 10^{-9}$ radians) with a range of $\pm 6$ arc seconds. Where such accuracy is not required, such devices can be fabricated which have a resolution of at least 1 arc second with a dynamic range of $\pm 3^\circ$. Such devices are capable of operating from DC to 50 MHz, the upper limit being established by the frequency limitation of the photovoltaic cells.

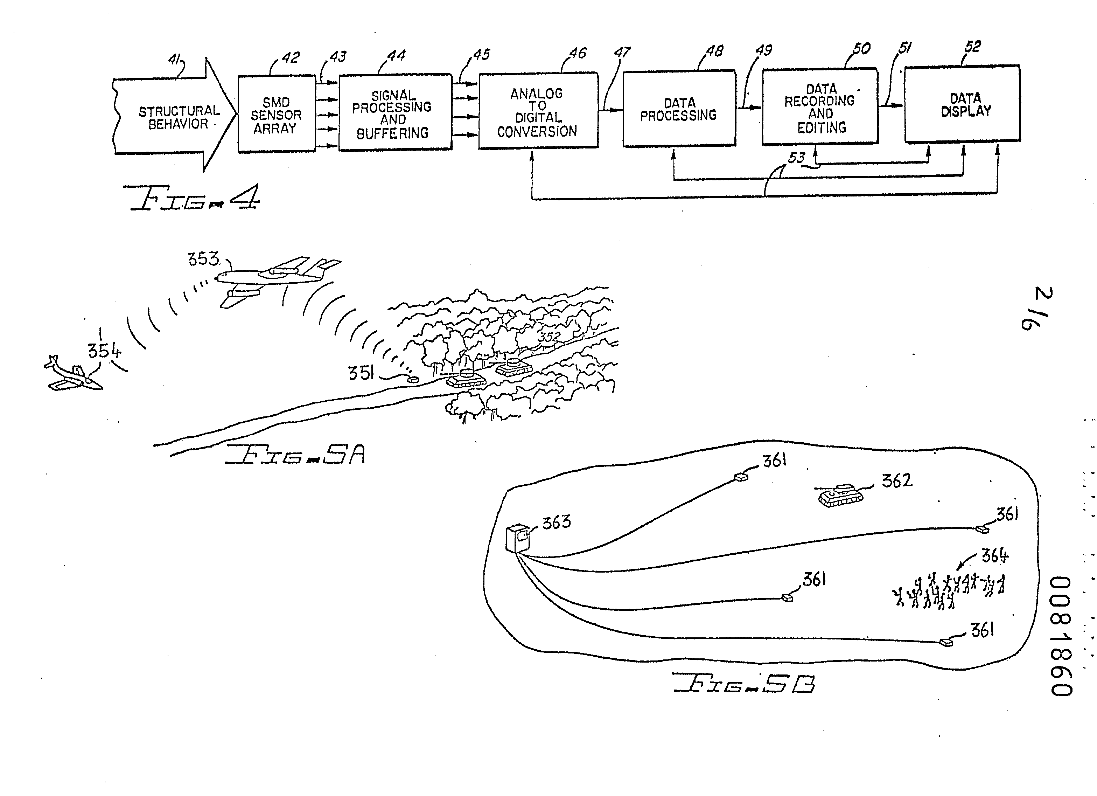

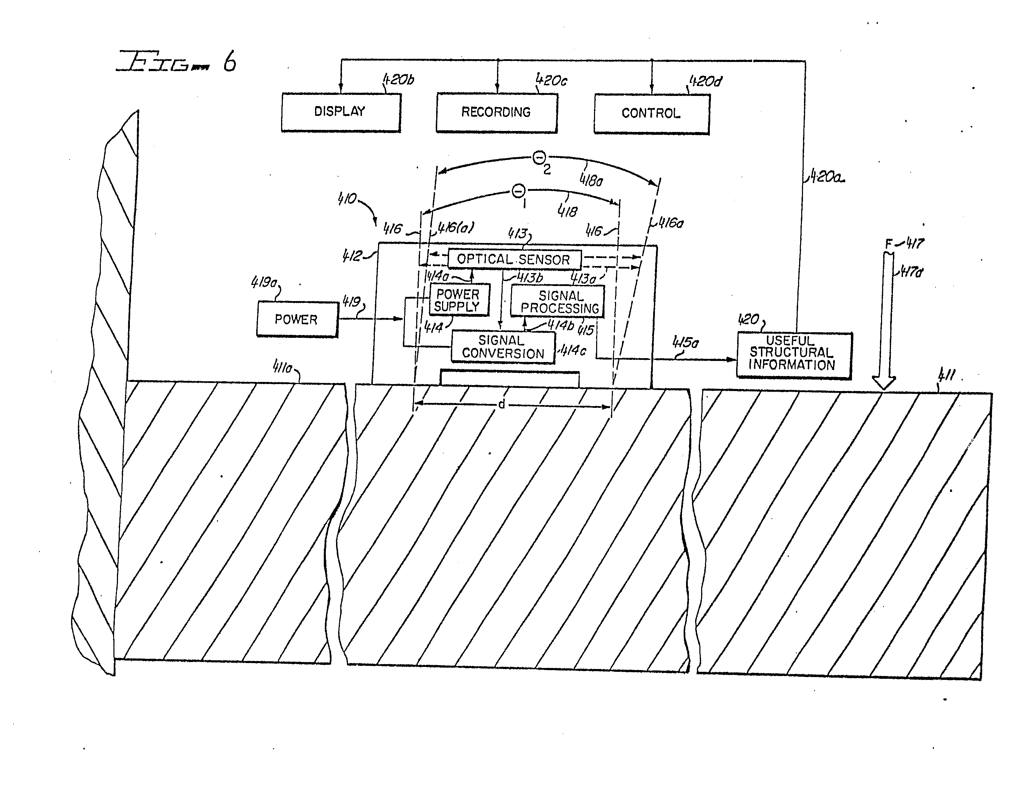

Typical circuits which are used in conjunction with the mechanical components of the structural moment detector of Fig. 1 are illustrated in Figs. 2 and 3. Fig. 2 is a schematic diagram of a suitable LED driver circuit which is a simple constant current source circuit which is required to provide a light source with constant light intensity. A typical suitable readout circuit is illustrated in Fig. 3, which depicts an analog output circuit consisting of a first stage amplifier with common mode rejection that permits linear operation of the photovoltaic cells.

The operation of the structural moment detector can be illustrated by reference to a simplified example of a cantilevered beam which is loaded and the structural moment detector is mounted at points a and b located near the supported end of the cantilevered beam. If the deflection of the beam is measured as $\theta$, the angle between surface tangents at points a and b, the output voltage of the photovoltaic cells is proportional to this angle, and according to the Area Moment Theorem

$$V_{out} \propto = \frac{\int_a^b Mdx}{EI} = \frac{1}{EI} \int_a^b Mdx$$

where

M is the applied moment between points a and b

E is the modulus of elasticity

I is the moment of inertia

$\theta$ is the angular difference between surface tangents at points a and b

x is the linear surface distance between points a and b.

If a load P is placed on the end of a beam of length L and is the distance between points a and b,

then

$$V_{out} \propto \theta = \frac{1}{EI} \quad \frac{PL\,\delta}{2}$$

To illustrate the sensitivity of the structural moment detector, a load of 1 gram was placed at the end of an 8" cantilevered beam. The device was mounted near the support of the beam such that points a and b were 1.5" apart. With this load

$$V_{out} = 30 \text{ millivolts}$$

and

$$\theta = 1.3 \times 10^{-7} \text{ radians.}$$

Since it is impossible to load a structure without changing the total moment which occurs between two points on the structure, it is possible to use the structural moment detector as an extremely accurate and extremely sensitive sensor having a range which far exceeds that of conventional sensors of the prior art.

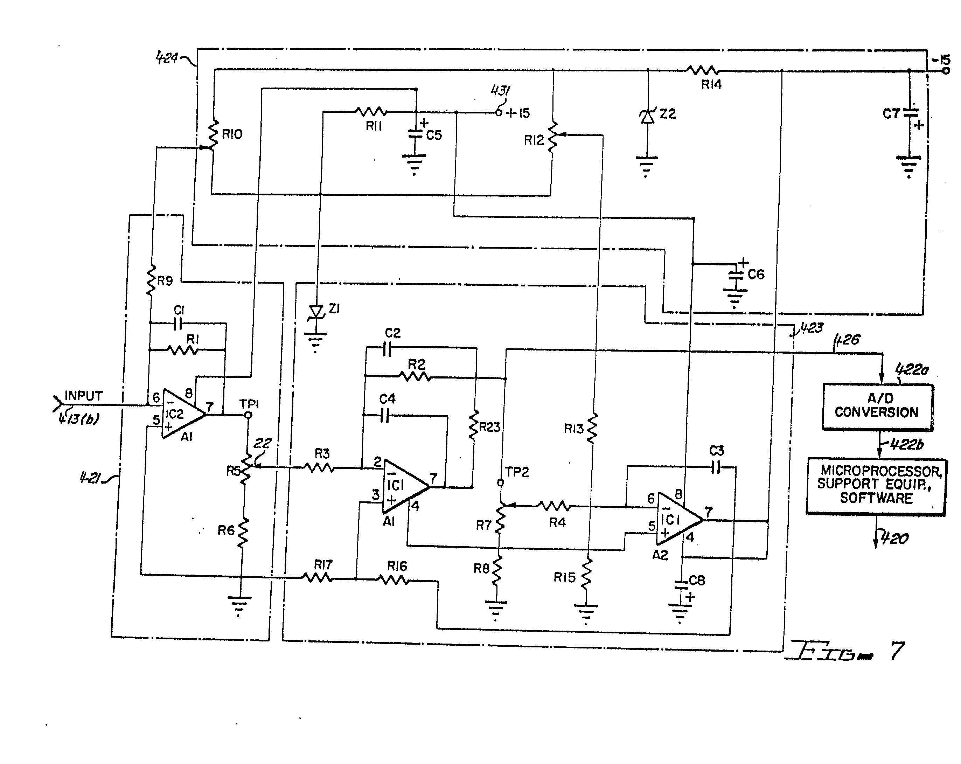

The general system of the invention is schematically illustrated in Fig. 4. As shown in Fig. 4, the structural behaviour 41, which is effected by the forces acting on the structure, are sensed by an array 42 of structural moment detectors (SMD's), located on the structure. The SMD's 42 are located on the structure so as to provide primary electronic signals 43 which are proportional to the structural behaviour parameter of interest. The primary electronic signals 43 from the SMD array 42 are fed to signal processing and buffering equipment 44, which includes electronic circuitry which modifies the information content of the primary signals 43 (e.g., rejection of background noise, rejection of signal components induced by other forces, etc.) and which electrically isolate the sensors from the remainder of the system. The processed signals 45 are then transmitted to analog-to-digital converters 46 which convert the analog information in the processed signals 45 to a digital format compatible with various digital processors, recorders, editors and/or display units. The digital signals 47 are then transmitted to a data processor 48 which will usually be a single-frame computer which is capable of accepting digital data and manipulating it in a predetermined, programmable fashion, in order to convert the digitized measurement information into a digital representation of the desired system data. The digital representation data 49 is optionally transmitted to data recording/editing equipment 50 which may provide for permanent recording of all or part of the acquired data for later use and which may, additionally, provide manual editing capability. The recorded and/or edited data 51 may optionally be transmitted to data display equipment 52 which provides visual display of the acquired data and, additionally, may provide for the predetermined alteration of the means by which the data processing equipment 48 is transforming acquired data or the manner in which data is digitized, recorded, edited and/or displayed. Feedback loops 53 may be optionally provided, through which the information at one stage is fed backwardly and/or forwardly to another stage of the system to provide improved accuracy, estimation, prediction or other similar functions. These feedback paths may be electrical, optical, mechanical and/or may involve human interpretations and adjustments.

According to this invention, systems are provided for detecting, warning of and characterising the source of intrusions of the security perimeters of relatively large geographical areas.

The extreme sensitivity of the SMD provides a seismic detector and the invention incorporates such a detector into a system which is capable of providing information on type, number, location, and movement of enemy forces.

The SMD is mounted on a diaphragm and used as a geophone. The sensitivity of the SMD coupled with the variable design parameters (material, thickness, size, mounting technique) of the diaphragm produce a geophone of remarkable performance.

When suitably deployed, any motion near the sensor produces a characteristic vibration signature. The existence of the signal is used to indicate movement and the frequency content is analyzed to provide information about the source. Using triangulation techniques and/or proximity to various sensors, the location and direction of movement can be determined.

The system is capable of detecting and monitoring movement on the ground or in below - ground tunnels. Sensors can be hardwired to processing equipment or can be self-contained battery powered units which communicate optically or electronically with monitoring stations and/or aircraft.

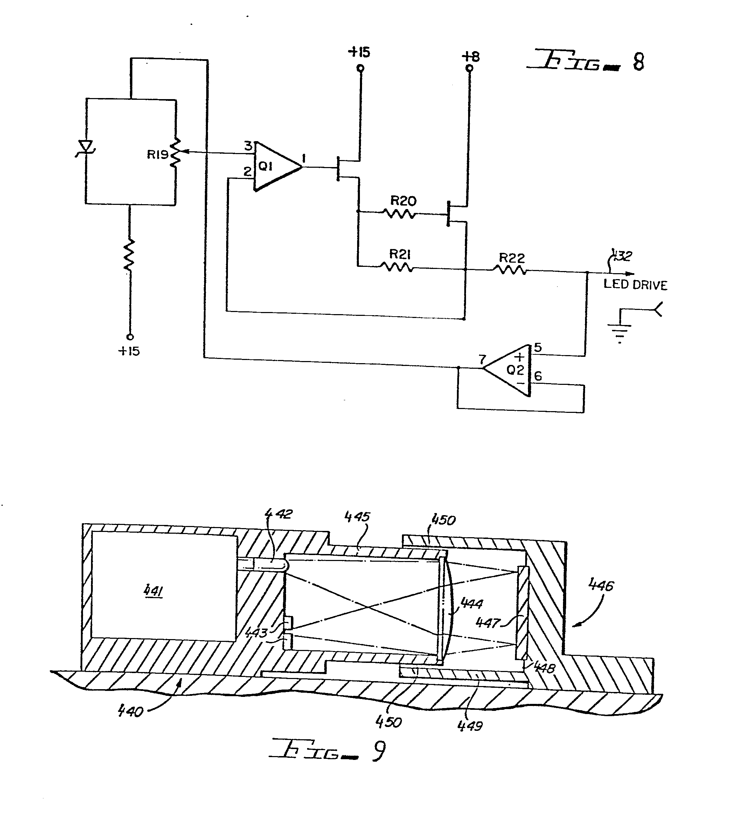

Figure 5A depicts one mode of application of this embodiment. The package 351 is deployed near a jungle trail. Enemy tanks 352 are detected. The information is radioed to the orbiting electronics aircraft 353 which calls in fighter aircraft 354 to strike the tanks.

Figure 5B depicts another mode of operation. Sensors 361 are deployed and are hardwired to the electronics, processing and display system 363. A tank 362 and a group of soldiers 364 are sensed and tracked. Frequency signatures permit discrimination of the tank and men.

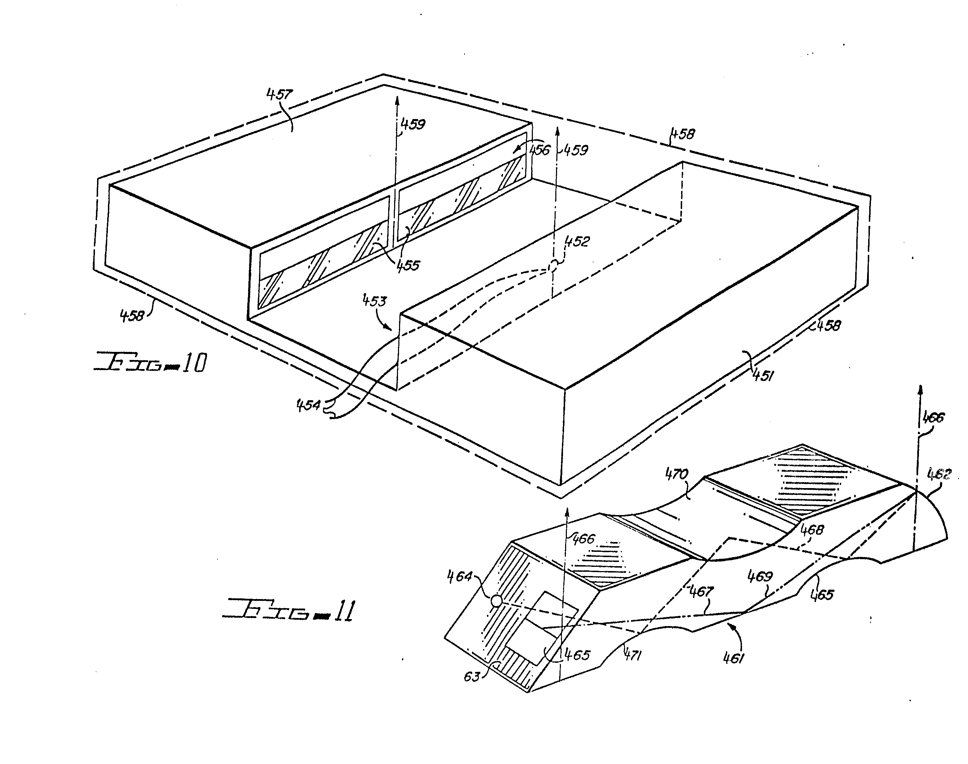

It will be appreciated that the "perimeter" monitored by the system in Figures 5 and 6 is not, in fact, physically defined by a barrier but is constituted by a strip of ground.

The SMD sensors used in Figures 4 and 5 are structural moment detectors (SMD's), for example, of the prior art form shown in Figure 1. These sensors can alternatively be implemented by means of "structural information detectors" in which raw data from a structural moment detector is converted and processed within a unitary device (including the SMD) such that the signal output from the device has a directly useful information content.

Fig. 6 is a block diagram illustrating the major sub-components of a structural information detector suitable for use in the systems described hereinbefore. The structural information detector, generally indicated by the reference numeral 410, is depicted for purposes of illustration as being mounted upon a simple cantilevered beam 411 and consists of a housing 412, an optical sensor 413, sensor power supply 414, raw signal conversion circuitry 414c and signal-processing electronics, including a microprocessor and appropriate software 415. The optical sensor 413, for example, a structural moment detector of the type generally disclosed in U.S. patent 4,287,511 (sometimes also known as a "flexural rigidity sensor") measures, as indicated by the dashed line 413a, the relative orientation of surface coordinate vectors which are, as illustratively depicted in Fig. 6, normals 416 to the surface 411a of the beam 411. If a force F (417) is applied in the direction of the arrow 417a to the beam 411, resultant bending of the beam 411 will cause a change in the relative orientation of the surface coordinate vectors 416 to the positions indicated by the dashed lines 416a, i.e., from the angular orientation 418 $\theta 1$ (shown in Fig. 6, illustratively, as $180^{\circ}$) to an angular orientation 418a $\theta 2$ which (as illustratively depicted in Fig. 6) is greater than $\theta 1$. Power 419 from an external power source 419a is supplied to the circuitry 414 which, as explained below, provides a regulated power supply 414a to the optical sensor 413. The raw data 413b from the optical sensor 413, which could be a variable voltage or a variable current, is supplied to the raw signal conversation portion of the circuitry 414, which converts the raw data, as will be further explained below, to a form which is the input 414b to the signal and data-processing electronics and software 415, which processes the converted signal 414b and provides, as the output 415a of the structural information detector 410, a signal which embodies useful structural information 420 which directly indicates the effect of the force F acting on the beam 411. As indicated by the line 420a, the useful structural information 420 can be utilised in any or all of a variety of ways, i.e., it can be used as the input to a direct display 520b which may be a simple galvanometric meter, liquid crystal display, light emitting diode display, cathode ray tube or the like. Also or alternatively, the useful structural information 420 can be used qas the input to a semi-permanent or perment recording device 420c, such as a paper recorder, magnetic recorder, semiconductor storage device, bubble memory storage device, or holographic storage device. Also or alternatively, the useful sturctural information 420 can form the input to various control devices 420d such as servomotors and other similar electromechanical devices.

As will be appreciate by those skilled in the art, it may be desirable to provide communication paths between some or all of the individual structural information detectors in a detector array and/or with suitable central data display, recording and/or control components, as well as with additional hardware and software which correlate the useful structural information outputs of the individual structural moment detectors in the array. These details have been omitted for the purpose of clarity.

The raw data output 413b of the optical sensor 413 is (referring to Fig. 7) the input to the signal processing electronics, including computational software therein depicted. The function of the circuitry depicted in Fig. 7 is to convert the raw data input 413b from the optical sensor into data suitable for electronic data processing and then to perform the data-processing function to yield a signal, the components of which directly provide useful structural information. According to the presently preferred embodiment of the structural information detector, the conversion is performed with analog electronics, rather than digital. The analog electronics perform two distinct functions. First, the output signal 413b from the optical sensor is measured and converted to a proportional voltage in a voltage follower circuit which, for clarity of illustration, are those components which are located within the dashed line 421. The second function is to amplify the proportional voltage signal from the voltage follower circuit 421 by feeding it through a gain control 422 into an amplifier which, for purposes of clarity of description, are those components located within the dashed line 423. The voltage follower circuit 421 operates as a short circuit load for the photovoltaic cells of the optical sensor. Feedback is added in the amplifier circuit 423 to shape the upper end of the frequency response so that spurious high frequency noise is attenuated. This function is performed by applying the output of IC1 (pin 7) to the input (pin 6) of IC2 through a voltage divider formed by R7-R8. IC2 acts as a low-pass filter. The output of IC2 (pin 7) is fed back through R16 to the input 3 of IC1 to act as an automatic bias adjustment. An offset voltage adjustment is provided to remove any bias due to photocell mismatch.

The gain control 422 provides a means of balancing the mechanical gain of different sensors and compensating for components variation. The nominal adjustment range is $\pm15\%$. The amplifier 423 is a high gain direct-coupled amplifier with feedback to further attenuate high frequency noise levels. Nominal gain is 1.5 volts/ microamp and the bandwidth is normally initially set at 50-500 Hz. In essence, A2 is a variable cut-off

0081860

low-pass filter. If the DC case is considered, its output will seek a level such that the voltage presented to pin 3 of A1 is equal to that presented to pin 2 by the voltage follower circuit. The scaling of the system is such that

$$U_{null} = V_{int} (R17/R16+R17) = V_{in}$$

where $V_{int}$ is the integrator output, $V_{in}$ is the first stage and $U_{null}$ is the input to A1, pin 2. Thus, for low frequency, $V_{int}$ represents a scaled value equal to or greater than $V_{in}$ independent of the gain in the second stage of the amplifier. The implication of this is that the gain of the second stage can be set very high for frequencies above the autonumm roll-off without completely losing DC information.

Support and bias circuits which include the components which are, for clarity of illustration, enclosed within the dashed line 424 are provided to provide conditioned power and bias voltages for the components of the voltage follower 421 and amplifier 423.

The output 426 of the amplifier 423 is an analog signal which is converted to a digital signal in the A-D converter 422a. A non-limiting, illustrative, exmaple of a suitable analog-digital converter is manufactured by the U.S. firm Analog Devices under number HAS1202.

The signal-processing electronics also includes a microprocessor 425 and appropriate computational software which converts the output signal 422b of the A-D converter 422a into electrical signals 420 which directly provide data related to the effect of the force acting on the structure to which the structural information detector is attached. In the presently preferred embodiment, this component includes a microprocessor, the necessary supporting devices and a power supply, details of which are omitted for purposes of clarity because they are well-known to those skilled in the art. Suitable non-limiting examples of microprocessors which can be employed are the TI9000 or the Intel 8086.

All of the elements described in Figs. 7 and 8 may be fabricated on a printed circuit board using standard integrated circuits or on a single thick film substrate where the circuits have been wire bonded to the substrate. In the embodiment of the detector described in connection with Fig. 10, these components may be made as a single integrated circuit on the same semiconductor substrate chip used in fabricating the optical sensor.

Another function of the signal-processing electronics is to provide a precise current to the light emitting diode of the optical sensor.

Typical non-limiting, illustrative, values of the components of Fig. 7 are set forth below:

Voltage Follower/Amplifier

      R1 - 220K
      R5 - 1K
      R6 - 2.2K
      R9 - 2.2M
      R23 - 82
      A1 - Operational Amplifier LF353/2

Second Stage Amplifier

      R2 - 680K
      R3 - 10K
      R4 - 1M
      R7 - 100K
      R8 - 10K

```
. R13 - 2.2M
  R15 - 220K
  R16 - 10K
  R17 - 1K
  C2 - 47PF
  C3 - 10MF
  C4 - 5PF
  A1 - Operational Amplifier LF 353/2
  A2 - Operational Amplifier LF 353/2
```

## Support and Bias Circuits

```
  R10 - 100K
  R11 - 1.8K
  R12 - 100K
  R14 - 1.8K
  C5 - 10MF
  C6 - 10MF
  C7 - 10MF
  C8 - 10MF
  Z1 - LM336
  Z2 - LM336
```

For the sake of clarity, the power supply circuitry has been separated from the circuitry of Fig.7 and is shown schematically in Fig. 8. The 15 volt power supply 431 is provided by the support and bias circuitry 424 of Fig. 7.

The power supply circuitry of Fig. 8 utilises two amplifiers in a high gain feedback arrangement to provide the necessary precise current 432 to the light emitting diode.

Typical non-limiting, illustrative, values of the components of Fig. 8 are set forth below:

Power Supply

R18 — 3.3K
R19 — 10K
R20 — 10K
R21 — 10K
R22 — 47
C9 — 10MF
C10 — 10MF
IC3 — Operational Amplifier LF353/2
Q1 — 2N5457
Q2 — TIP21

Fig. 9 is a sectional view illustrating a particular form of structural information detector which consists of a first housing sub-assembly generally indicated by reference character 440 containing the sensor power supply/raw signal conversion/ signal-processing electronics 441 of Figs. 7 and 8 , a light emitting diode 442, a pair of photovoltaic detectors 443 and a collimating lens 444 carried proximate the open end of a barrel portion 445 formed in the housing 440. A second housing sub-assembly, generally indicated by reference numeral 446, carries a plane surface mirror 447 on the inner end 448 of a mating barrel portion 449 formed in the housing sub-assembly 446. Although a substantial clearance 450 is shown between the barrel portion 445 formed in the first housing sub-assembly 40 and the barrel portion 449 formed in the second housing sub-assembly 446, it will be understood by those skilled in the art that this clearance is shown only for the purpose of clarifying the mechanical relationship of the two housing sub-assemblies 440 and 446. In actuality, the mating barrel portion 449 formed in the second housing sub-assembly 446 is shaped and dimensioned to receive the barrel portion 445 formed in the first housing sub-assembly 440 with an interference fit therebetween, to form a unitary structurally integrated device which excludes ambient light from the interior of the barrel portions 445 and 449 and which facilitates and assists in maintaining precise optical alignment of the two sub-assemblies.

Structural information detectors of the type depicted in Fig. 9 have been successfully manufactured and tested which are in the size range of as small as one inch in the major dimension. Present work indicates that, eventually, this can be reduced to 1/4-1/8" in the major dimension.

Fig. 10 illustrates another form of structural information detector in which all of its components are carried by any suitable semiconductor substrate, such as a silicon chip 451. The generally U-shaped chip 451 carries the light emitting diode 452 on an inner face 453 of one of the legs of the U-shaped chip and leads 454 for providing power to the light emitting diode. A pair of photovoltaic cells 455 are grown by known semiconductor manufacturing techniques on the inner face 456 of the opposing leg of the U-shaped chip 451. Bending of the chip 451 induced by bending of a structural member to which it is attached by any suitable technique, such as epoxy bonding, causes a variation in the light falling on the photocells 455, depending on the relative orientation of surface coordinate vectors (normals) 456. The circuitry of Figs. 7 and 8 is formed by known semiconductor manufacturing techniques in the portion 457 of the silicon chip 451. The entire chip is then received within a suitable housing indicated by the dashed lines 458 to protect the internal components from adverse ambient environmental effects and to prevent stray light from interfering with the operation of the optical components 452 and 455. As in the case of the embodiment of Fig. 9, devices such as those depicted

0081860

in Fig. 10 can be manufactured in a size as small as 1/4-1/8" in the major dimension.

In the form of structural information detector depicted in Fig. 11, the components of the optical sensor 410 (Fig. 6) are carried by an elongate light transmission member, generally indicated by reference character 461, formed of a light-transmitting flexible material such as, for example, methacrylate polymers and copolymers known in the art. A concentrating lens 462 is formed in one end of the light-transmission member 61 and the other end 463 carries a light source 464 such as a LED and a pair of photocells 465 which generate electrical signals indicating the relative orientation of surface vector coordinates (normals) 466 to the surface of a structural member upon which the structural information detector is mounted. If desired, the length of the light-transmission path 467 can be lengthened by cutting or forming facets 468 in the external surfaces of the elongate light-transmitting member which will reflect light beams 468 transmitted from the LED to the concentrating lens 462 and which are then reflected 469 to the photocells 465. The entire optics system illustrated in Fig. 11, along with the sensor power supply/raw signal conversion/signal-processing electronics components of the structural information detector of Fig. 6, are then enclosed in a suitable housing to protect the optics and electronics components from adverse ambient conditions and from interference caused by stray light. The housing is omitted in Fig. 11 for purposes of clarity. Of course, by omission of the signal processing electronics, the Figure 11 optics system can be employed as a simple structural moment detector.

CLAIMS

1. A perimeter security system for locating and characterising the source of attemped and/or actual penetration of the security perimeter of relatively large geographical areas, characterised in that the said system comprises, in combination;

    a) a plurality of structural moment detectors (361) arranged at spaced points in ground contact to detect intrusions and activities within and near the perimeter of said area;

    b) processing means (363) for processing said output signals to modify the information content thereof, including rejecting components of said signals indicative of the effects of extraneous seismic forces caused by other than said intrusions and/or activities; and

    c) signal-manipulating menas (363) for manipulating the processed signals output by the processing means to provide secondary siganls responsive to seismic forces caused by said intrusions and/or activities.

2. A system according to Claim 1, characerosed in that the or each said structural moment detector (361) and its associated processing and signal-manipulating means (363) is constituted by a respective structural information detector (410), said detector (410) comprising, in combination:

    a) a housing (412) mounted on a ground structure,

    b) optical means (413) within said housing (412) for detecting the relative orientation (413a) of spaced surface coordinate vectors (416a) of said structure , and for generating primary
signals (413b) in response to changes in
said orientation;

c) circuit means (414c) within said housing
(412) for converting said primary signals
(413b) to a form usable by signal-processing
electronics; and

d) signal-processing electronics means (415)
within said housing (412), including
computational software, for processing the
converted primary signals (414b) to said
secondary signals (415a) .

3. A system according to Claim 2, characterised
in that the optical means (413), circuit means (414c),
and signal-processing electronics means (415)
of the structural information detector (410)
are carried by a single-piece semiconductor substrate
(451) received within said housing (412).

4. A system according to Claim 2, characterised in
that the housing (412) of the structural information
detector (410) comprises first and second housing
sub-assemblies (440,446) and in that:

a) said first housing sub-assembly (440)
contains said circuit means (441), said signal-
processing electronics means (441), and those
components of said optical means (413) which
include a light source (442), a plurality of
photovoltaic detectors (443) and a
collimating lens (444); the light source (442)
and photovoltaic detectors (443) being
carried on the inner  face of a hollow barrel portion (445) of said first housing
sub-assembly (440) and said collimating lens
(444) being carried proximate the open end
of said barrel portion (445);

b)    said second housing sub-assembly (446)
contains, as another component of said
optical means (413), a plane surface mirror
(447) carried on the inner end (448)
of a barrel portion (449)of the second
housing sub-assembly (446), the two said
housing barrel portions (445, 449) being
shaped and dimensioned to mate one within
the other with an interference fit therebetween
to form a unitary structurally-integrated
device; and

c)    said first and second housing sub-assemblies
(440,446) are mountable at spaced points.

5. A system according to Claim 2, characterised
in that the said optical means (410) of
the structural information detector comprises:

a)    an elongate light-transmission member (461)
formed of a light-transmitting flexible
material and having a light-transmitting/
receiving end (463) and a reflecting end;

b)    a concentrating lens (462) formed in the
reflecting end of the member (461);

c)    a light source (464) carried by said light-
transmitting/receiving end (463) of the
member, the light source (464) being
positioned such as to direct light through
the member (461) toward said reflecting end;

d) light-receiving means (465) carried by the
   light-transmitting/receiving end (463) of the
   member, the light-receiving means (465)
   being arranged to receive light transmitted
   through said member from the light source
   (464) to the concentrating lens (462) and
   reflected thereby back through said member
   to the light-receiving means (465), and to
   generate electrical signals in response to the
   received light; and

e) means for connecting the said ends of the
   light-transmission member (461) to spaced
   points on the ground such that ground
   movement causes corresponding bending of
   the light-transmission member (461) and,
   in turn, causes a variation in the amount
   of light received by the light-receiving
   means (465).

# 0081860

1/6

FIG-1

$R_1 = 4990$ OHM
$R_2 = 20$ OHM
$T_1 = T_2 = 2N2222$
  OR EQUIVALENT
LED = LIGHT EMITTING DIODE

FIG-2

$R_1 = 1-10M\Omega$
$R_2 = 100-700K\Omega$
PV = PHOTOVOLTAIC
  CELL

FIG-3

```
┌──────────────┐   ┌──────────┐   ┌──────────────┐   ┌──────────────┐   ┌──────────────┐   ┌──────────────┐   ┌──────────────┐
│  STRUCTURAL  │→→ │   SMD    │→→ │    SIGNAL    │→→ │   ANALOG     │→  │     DATA     │→  │     DATA      │→  │     DATA     │
│   BEHAVIOR   │   │  SENSOR  │   │ PROCESSING   │   │     TO       │   │  PROCESSING  │   │  RECORDING   │   │   DISPLAY    │
│              │   │  ARRAY   │   │     AND      │   │   DIGITAL    │   │              │   │     AND      │   │              │
│              │   │          │   │  BUFFERING   │   │  CONVERSION  │   │              │   │   EDITING    │   │              │
└──────────────┘   └──────────┘   └──────────────┘   └──────────────┘   └──────────────┘   └──────────────┘   └──────────────┘
      41              42  43            44      45          46    47          48      49         50    51          52
```

## F̄ɪɢ-4

## Fɪɢ-5A

353
354
352
351

## Fɪɢ-5B

361
362
361
363
364
361
361

0081860

**Fig. 6**

| DISPLAY | RECORDING | CONTROL |
|---|---|---|

420b  420c  420d

420a

2  418a
418  416a
410
416  416(a)  413  416
412  OPTICAL SENSOR

419a
POWER  419
414a  413b  413a
POWER SUPPLY  SIGNAL PROCESSING
414  414b  415
SIGNAL CONVERSION  414c  415a
420  USEFUL STRUCTURAL INFORMATION

F  417
417a

411a
d
411

0081860

Fig. 7

0081860

FIG- 8

+15   +8

R19

3
2  Q1  1

R20

R21   R22   132

LED DRIVE

+15

7  Q2  5
+      6
-

FIG- 9

442   445   450

441

443   444   447

446

448

440   450   449

FIG-10

FIG-11